# DEMANDE DE BREVET EUROPEEN

(11) **EP 2 390 875 A1**
(43) Date de publication de la demande: **30.11.2011**
(21) Numéro de dépôt: 11168025.2
(22) Date de dépôt: 30.05.2011
(51) Int. Cl.: G10L 15/28, H04M 3/493, H04L 29/08

(54) **Procédés de pilotage et de gestion d'un dialogue interactif, plateforme et serveur d'application les mettant en oeuvre**

(30) Priorité: 31.05.2010 FR 1054203
(71) Demandeur: FRANCE TELECOM, 75015 Paris (FR)
(72) Inventeur: Paillet, Eric, 22730 Trégastel (FR); Gyss, Jean François, 22300 Rospez (FR)
(74) Mandataire: Delumeau, François Guy

(57) **Abrégé**

Dans ce procédé de pilotage d'un dialogue interactif, la plateforme envoie au serveur d'application (SA) des requêtes intermédiaires (RQI) comportant des données représentatives d'une partie seulement de l'interaction entre l'utilisateur et le terminal, avant la fin de l'interaction, auxquelles le serveur d'application répond par des réponses intermédiaires (RPI).

L'invention permet ainsi d'anticiper la saisie complète de l'utilisateur et d'offrir un service plus rapide et plus interactif.

## Description

L'invention se situe dans le domaine des services de communication interactifs, services dans lesquels un utilisateur établit, via un terminal, un dialogue avec un serveur d'application pour obtenir des informations ou déclencher un service.

De façon connue, ces dialogues peuvent être vocaux, textuels, ou multimodaux.

Dans le cas d'un dialogue textuel, l'utilisateur saisit une requête au clavier, cette requête étant transmise au serveur d'application qui lui retourne une réponse par exemple sous la forme d'une page HTML générée par un gestionnaire de dialogues.

Dans le cas d'un dialogue vocal, une plateforme vocale s'interface entre le terminal de l'utilisateur et le gestionnaire de dialogues, cette plateforme vocale comportant un moteur de reconnaissance vocale apte à détecter la fin d'une interaction entre le terminal et l'utilisateur et à envoyer, au serveur d'application, une requête comportant les informations représentatives de la saisie vocale de l'utilisateur.

Ce serveur d'application comporte un analyseur sémantique et un gestionnaire de dialogues aptes à générer une page VoiceXML utilisée par la plateforme vocale pour restituer un message à l'utilisateur. Il peut aussi comporter un analyseur sémantique, ce dernier n'étant pas indispensable, en particulier dans le cas de saisies par mots clés.

Récemment, des développements ont été réalisés pour améliorer l'interface entre le terminal et l'utilisateur.

On connaît en particulier des agents conversationnels graphiques, autrement appelés « avatars », aptes à assister l'utilisateur dans la préparation de sa requête.

Par ailleurs, des moteurs de recherche proposent de présenter, à l'utilisateur, des requêtes de saisie préenregistrées dans une base de données sur la base des premiers caractères saisis par l'utilisateur.

Si ces techniques améliorent effectivement considérablement l'interaction entre l'utilisateur et le terminal, précisément, dans l'établissement de la requête de l'utilisateur, elles ne permettent pas d'améliorer le dialogue entre un utilisateur et un serveur d'application.

### Objet et résumé de l'invention

L'invention vise un mécanisme permettant d'améliorer le dialogue interactif entre un utilisateur et un serveur d'application.

Plus précisément, et selon un premier aspect, l'invention concerne un procédé de pilotage d'un dialogue interactif pouvant être mis en oeuvre par une plateforme pour piloter un dialogue interactif entre un utilisateur d'un terminal et un serveur d'application, la plateforme, le terminal et le serveur d'application étant aptes à communiquer via un réseau de télécommunications, ce procédé comportant :
- une étape de détection de la fin d'une saisie de l'utilisateur; et
- une étape d'envoi, suite à la détection, d'une requête dite de fin de d'interaction au serveur d'application, la requête comportant des données représentatives de l'interaction.

Ce procédé comporte en outre au moins une étape d'envoi d'une requête intermédiaire au serveur d'application, avant la fin de l'interaction, la requête intermédiaire comportant des données représentatives d'une partie seulement de l'interaction.

En particulier, le procédé comporte également au moins une étape de réception, avant la fin de l'interaction, d'une réponse intermédiaire en réponse à la requête intermédiaire.

Corrélativement, l'invention vise une plateforme comportant des moyens de communication avec un terminal et des moyens de communication avec un serveur d'application, cette plateforme comportant :
- des moyens de détection de la fin d'une interaction entre l'utilisateur et le terminal; et
- des moyens d'envoi, suite à la détection, d'une requête dite de fin de d'interaction au serveur d'application, la requête comportant des données représentatives de l'interaction.

Cette plateforme est remarquable en ce que les moyens d'envoi sont aptes à envoyer au moins une requête intermédiaire au serveur d'application, avant la fin de l'interaction, la requête intermédiaire comportant des données représentatives d'une partie seulement de l'interaction.

En particulier, la plateforme comporte également des moyens de réception, avant la fin de l'interaction, d'au moins une réponse intermédiaire en réponse à au moins une requête intermédiaire.

Dans ce document, les définitions suivantes sont utilisées :
- « saisie », « demande utilisateur » ou « interaction utilisateur » : expression formulée par écrit ou oralement consistant en une chaîne de caractères et/ou de mots ;
- « requête » : interrogation adressée par le terminal au serveur et consistant en une demande de traitement ou d'informations.
- « interaction » : échange composé d'une saisie utilisateur et de la réponse du serveur ;
- « dialogue » : suite d'interactions (demandes de l'utilisateur et réponses du serveur).

Ainsi, d'une façon générale, le procédé de pilotage et la plateforme selon l'invention permettent d'envoyer, au serveur d'application, des requêtes intermédiaires sans attendre la fin de la saisie entre l'utilisateur et son terminal.

L'invention permet ainsi d'anticiper la saisie complète de l'utilisateur et d'offrir un service plus rapide et plus interactif.

Selon un deuxième aspect, l'invention vise également un procédé de gestion d'un dialogue interactif pouvant être mis en oeuvre par un serveur d'application, ce procédé comportant :
- une étape de réception d'une requête dite de fin de saisie comportant des données représentatives d'une interaction entre un utilisateur et un terminal ; et
- une étape d'envoi d'une réponse de fin de saisie en réponse à ladite requête.

Ce procédé comporte en outre, avant la réception de la requête de fin de saisie, au moins :
- une étape de réception d'une requête intermédiaire comportant des données représentatives d'une partie seulement de l'interaction ; et
- une étape d'envoi d'une réponse intermédiaire en réponse à la requête intermédiaire.

Corrélativement l'invention vise aussi un serveur d'application comportant :
- un gestionnaire de dialogues ;
- des moyens de réception d'une requête dite de fin de saisie comportant des données représentatives d'une interaction entre un utilisateur et un terminal ; et
- des moyens d'envoi d'une réponse de fin de saisie en réponse à ladite requête.

Ce serveur d'application comporte des moyens pour recevoir, avant la réception de la requête de fin de saisie au moins une requête intermédiaire comportant des données représentatives d'une partie seulement de l'interaction et des moyens pour envoyer une réponse intermédiaire en réponse à la requête intermédiaire.

Très avantageusement, le procédé de gestion d'un dialogue interactif et le serveur d'application selon l'invention sont aptes à renvoyer à l'utilisateur, des réponses intermédiaires en réponse aux requêtes intermédiaires avant la fin du dialogue.

Dans un mode particulier de réalisation de l'invention, une requête intermédiaire peut comporter une information représentative de l'interaction entre l'utilisateur et son terminal depuis l'envoi de la dernière requête intermédiaire.

Autrement dit, dans ce mode de réalisation, la saisie complète de l'utilisateur (vocale ou textuelle) correspond à la concaténation des informations correspondant à chaque requête intermédiaire.

Dans un autre mode de réalisation, au moins une requête (à savoir une requête intermédiaire ou la requête de fin de saisie) reprend toute l'interaction entre l'utilisateur et le terminal jusqu'à l'envoi de cette requête.

L'invention s'applique quelque soit la modalité (vocale, textuelle, multimodale) utilisée dans le dialogue entre l'utilisateur et son terminal.

Par exemple, lorsque l'utilisateur interagit vocalement avec son terminal, l'étape d'envoi de requête intermédiaire peut être effectuée après la détection de chaque fin de mot prononcé par l'utilisateur.

La détection d'une fin de mot peut être déterminée par un silence d'une durée au moins égale à la durée « complete-timeout » définie par le protocole MRCP (Media Resource Control Protocol).

De façon connue, cette valeur permet de définir la durée d'un silence au-delà laquelle on considère que l'utilisateur a terminé un mot alors que la valeur « incomplete-timeout » (définie par le protocole MRCP) décrit la durée d'un silence au-delà de laquelle on considère que l'utilisateur a terminé sa saisie vocale.

Lorsque l'utilisateur interagit avec un clavier de son terminal (modalité textuelle), l'étape d'envoi de requête intermédiaire peut être effectuée après la détection de chaque fin de mot saisi par l'utilisateur ou après la détection de chaque caractère saisi par cet utilisateur.

On se rapproche ici du standard T140 utilisé dans le contexte des messageries instantanées, ce type de mécanisme n'ayant jamais été mis en oeuvre dans le cadre d'une interaction entre un utilisateur et un serveur d'application.

Dans un mode particulier de réalisation, les différentes étapes du procédé de pilotage de dialogues interactifs sont déterminées par des instructions de programmes d'ordinateurs.

De même, dans un mode particulier de réalisation de l'invention, les différentes étapes du procédé de gestion de dialogues interactifs sont déterminées par les instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de pilotage ou de procédé de gestion tels que mentionnés ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de l'invention ressortiront de la description faite ci-dessous en référence aux dessins annexés qui en illustrent un exemple de réalisation dépourvu du tout caractère limitatif.

Sur les figures :
- la Figure 1 représente une plateforme et un serveur d'application conformes à un mode particulier de réalisation de l'invention ;
- la Figure 2 représente, de façon schématique, l'architecture matérielle de la plateforme de la Figure 1 ;
- la Figure 3 représente sous forme d'organigramme les principales étapes d'un procédé de pilotage de dialogues interactifs conforme à un mode particulier de réalisation de l'invention ;
- la Figure 4 représente l'architecture matérielle d'un serveur d'application conforme à un mode particulier de réalisation de l'invention ;
- la Figure 5 représente sous forme d'organigramme les principales étapes d'un procédé de gestion de dialogues interactifs conforme à un mode particulier de la réalisation de l'invention ; et
- les Figures 6A à 6C illustrent des requêtes émises par une plateforme conforme à l'état de la technique et par une plateforme conforme à un mode particulier de réalisation de l'invention.

### Description détaillée de l'invention

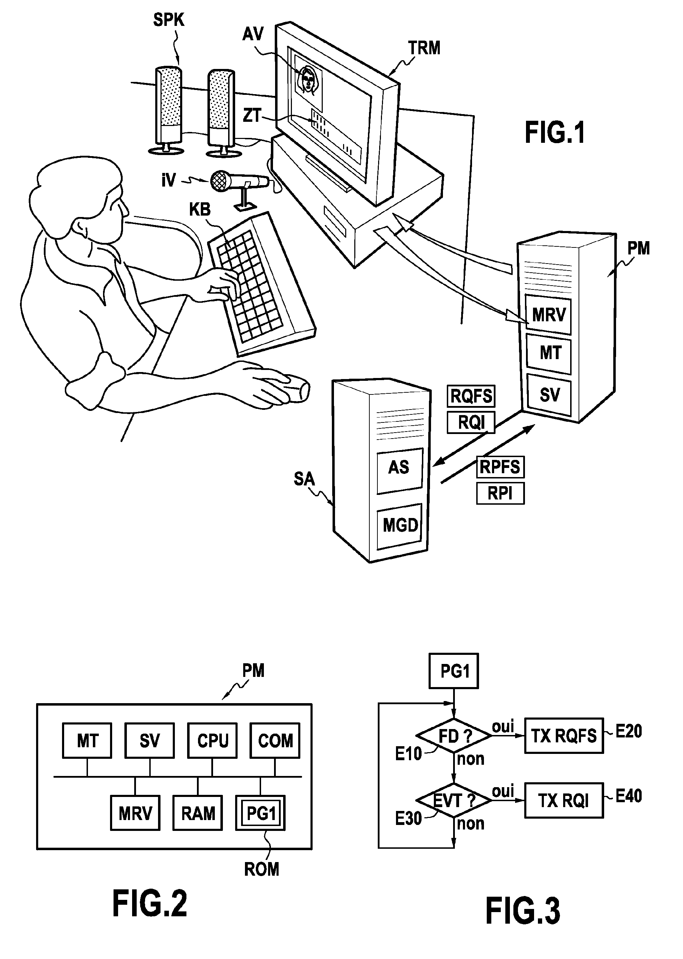

La **Figure 1** représente un terminal TRM, une plateforme PM et un serveur d'application SA conformes à un mode particulier de réalisation de l'invention.

L'utilisateur interagit avec son terminal au moyen d'une interface vocale IV (par un microphone), ou d'un clavier KB. Les messages sonores sont restitués par des enceintes SPK.

Sur l'écran de son terminal sont présentés une zone de texte ZT et un agent conversationnel graphique (avatar) AV.

Le terminal, la plateforme et le serveur d'application SA communiquent via un réseau de télécommunication représenté par des flèches.

Dans l'exemple de réalisation décrit ici, la plateforme PM est une plateforme multimodale. Elle comporte comme de façon connue, un module de reconnaissance vocale MRV et un module de synthèse vocale SV.

Dans cet exemple, le serveur d'application SA comporte un analyseur sémantique AS et un module gestionnaire de dialogues MGD. L'analyseur sémantique est optionnel ; il peut aussi faire partie du module gestionnaire de dialogues MGD.

Dans l'exemple de réalisation décrit ici, lorsque l'utilisateur interagit avec son terminal TRM au moyen du clavier KB, les caractères saisis dans la zone de texte ZT sont transmis, caractère par caractère, ou mot par mot, à la plateforme multimodale PM.

De la même façon, les saisies vocales de l'utilisateur sont transmises en temps réel à cette plateforme multimodale.

Conformément à l'invention, la plateforme multimodale PM n'attend pas la fin du dialogue pour communiquer le contenu de l'interaction entre l'utilisateur et son terminal TRM au serveur d'application SA.

Plus précisément, dans l'exemple de réalisation décrit ici, après chaque mot prononcé par l'utilisateur, la plateforme multimodale PM envoie une requête intermédiaire RQI au serveur d'application SA comportant ce mot.

De la même façon, après chaque caractère ou mot saisi par l'utilisateur au clavier, la plateforme multimodale PM envoie une requête RQI comportant ce caractère ou ce mot au serveur d'application SA.

De plus, lorsque la plateforme multimodale PM détecte la fin d'une saisie utilisateur (soit par un silence long dans le cas d'un dialogue vocal, soit par un retour chariot dans le cadre d'un dialogue textuel), la plateforme multimodale PM envoi une requête de fin de saisie RQFS au serveur d'application.

Dans l'exemple de réalisation décrit ici cette requête de fin de saisie RQFS reprend tout le dialogue entre l'utilisateur et son terminal,

En variante il ne pourrait reprendre par exemple, que la fin de la saisie utilisateur, depuis le dernier envoi d'une requête intermédiaire.

Conformément à l'invention, le serveur d'application SA répond à chacune des requêtes intermédiaires RQI par une réponse intermédiaire RPI et à la requête de fin de saisie RQFS par une réponse de fin de saisie RPFS.

La **Figure 2** représente l'architecture matérielle de la plateforme multimodale PM.

Dans le mode de réalisation décrit ici cette plateforme multimodale PM comporte l'architecture matérielle d'un ordinateur.

Elle comporte un processeur CPU, des moyens de communication COM, une mémoire morte de type ROM et une mémoire vive de type RAM.

Elle comporte également un module de synthèse vocale SV et un module de reconnaissance vocale MRV.

Le module de reconnaissance vocal MRV est apte à reconnaître les mots prononcés par l'utilisateur et à les transmettre au serveur d'application SA dans des requêtes RQI, RQFS.

Le module de synthèse vocale SV est apte à générer un message destiné à l'utilisateur.

Dans un mode particulier de réalisation de l'invention, la plateforme multimodale PM comporte un interpréteur de pages VoiceXML émises par le serveur d'application SA, les données interprétées étant fournies en entrée du module de synthèse vocale SV. D'autres formalismes d'échange peuvent être mis en place entre le serveur d'application SA et la plateforme multimodale PM.

Dans le mode de réalisation décrit ici, la plateforme multimodale PM comporte également un module MT apte à transmettre au serveur d'application SA les caractères ou les mots saisis par l'utilisateur au moyen du clavier KB dans des requêtes intermédiaires RQI et un serveur Web non représenté apte à générer une page Web visualisable par l'utilisateur au moyen d'un navigateur.

La mémoire morte de type ROM constitue un support d'enregistrement conforme à l'invention. Elle mémorise un programme d'ordinateur comprenant des instructions pour mettre en oeuvre un procédé de dialogues interactifs conforme à l'invention dont les principales étapes vont maintenant être décrites en référence à la Figure 3.

Sur la **Figure 3**, on a représenté les principales étapes d'un procédé de gestion d'un dialogue interactif conforme à l'invention, ce procédé étant mis en oeuvre par la plateforme multimodale PM.

Ce procédé comporte une première étape E10 au cours de laquelle la plateforme multimodale PM détecte si le dialogue textuel ou vocal entre l'utilisateur et son terminal TRM est terminé.

Si tel est le cas, le résultat du test E10 est positif et la plateforme multimodale PM envoie, au cours d'une étape E20, une requête de fin de saisie RQFS au serveur d'application SA.

Dans cet exemple, cette requête de fin de saisie RQFS comporte l'intégralité de la saisie entre l'utilisateur et son terminal TRM.

Tant que la saisie n'est pas terminée, le résultat du test E10 est négatif et la plateforme multimodale PM détecte, au cours d'une étape E30, si un événement EVT nécessite l'envoi d'une requête intermédiaire RQI au serveur d'application SA.

Dans l'exemple de réalisation décrit ici un événement EVT est constitué par :
- la détection d'un caractère ou d'un mot saisi par l'utilisateur ; ou
- la détection d'un silence suffisamment long (par exemple de durée « complete-timeout ») entre deux mots ou entre deux groupes de mots saisis par l'utilisateur.

Si tel est le cas, le résultat de l'étape E30 est positif et cette étape est suivie par l'envoi, au cours d'une étape E40 d'une requête intermédiaire RQI comportant le dialogue de l'utilisateur avec son terminal, depuis l'envoi de la dernière requête intermédiaire RQI.

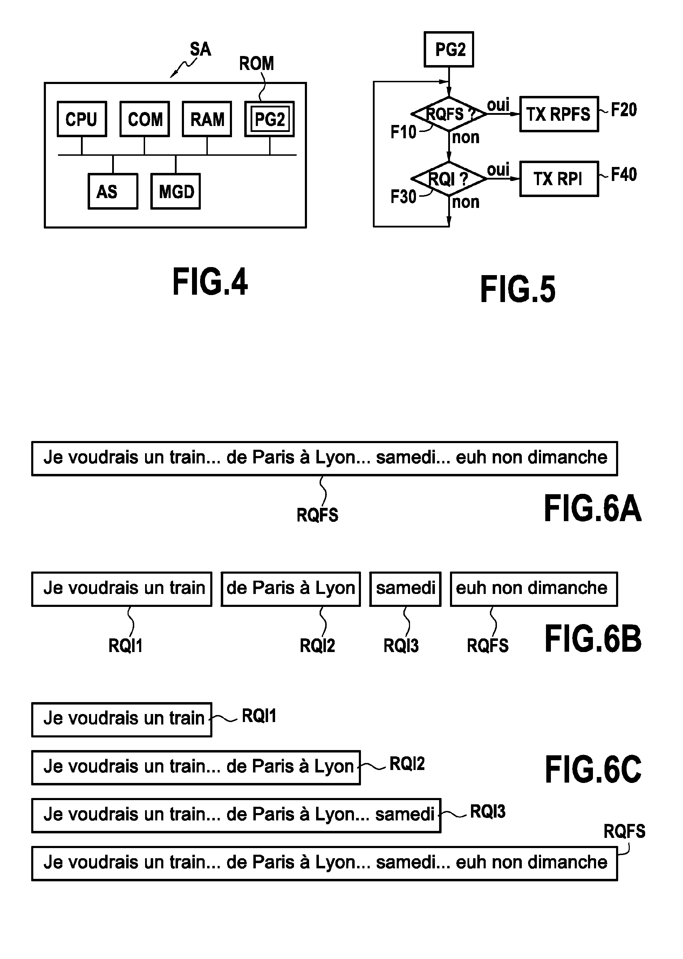

La **Figure 4** représente l'architecture matérielle du serveur d'application SA.

Dans cet exemple, le serveur d'application comporte principalement un processeur CPU, des moyens de communication COM, une mémoire morte de type ROM, une mémoire vive RAM, un analyseur syntaxique AS et un module gestionnaire de dialogues MGD.

La mémoire morte dite ROM constitue un support d'enregistrement conforme à l'invention.

Ce support mémorise un programme d'ordinateur PG2 dont les principales étapes vont maintenant être décrites en référence à la Figure 5.

A la **Figure 5**, on a représenté sous forme d'organigramme les principales étapes F10 à F40 d'un procédé de gestion de dialogues interactifs pouvant être mis en oeuvre par un serveur d'application SA.

Au cours d'une étape F10, le serveur d'application SA détermine s'il a reçu une requête de fin de saisie RQFS.

Si tel est le cas, il répond à cette requête par une réponse de fin de saisie RPFS au cours d'une étape F20.

Mais, conformément à l'invention, le procédé de gestion de dialogues comporte également une étape F30 au cours de laquelle le serveur d'application SA détermine s'il a reçu une requête intermédiaire RQI.

Si tel est le cas, il répond à cette requête intermédiaire RQI par l'envoi d'une réponse intermédiaire RPI au cours d'une étape F40.

La **Figure 6A** illustre une requête de fin de saisie conforme à l'état de la technique, dans le cadre, par exemple, d'un service de réservation de train.

Dans l'état de la technique, lorsqu'un utilisateur saisit une requête, qu'elle soit textuelle ou vocale, la plateforme PM multimodale attend la fin de la saisie utilisateur pour envoyer une requête RQFS comportant l'intégralité de la saisie au serveur d'application.

A la **Figure 6B** on a représenté une mise en oeuvre possible de l'invention dans laquelle des requêtes intermédiaires RQI1, RQI2 et RQI3 ainsi qu'une requête de fin de saisie RQFS sont envoyées par la plateforme multimodale, au serveur d'application, dès qu'un silence ou un espace est détecté.

Dans cet exemple, la requête de fin de saisie RQFS ne comporte que la partie de la demande prononcée ou saisie par l'utilisateur depuis l'envoi de la dernière requête intermédiaire RQI3.

Sur réception d'une requête intermédiaire RQI1, RQI2 et RQI3, le serveur d'application AS peut envoyer des réponses intermédiaires à l'utilisateur pour améliorer l'interaction.

Par exemple, sur réception d'une requête intermédiaire RQI2 il peut proposer tous les trains roulant de Paris à Lyon, puis, après la réception de la requête RQI3, conserver dans la liste des trains proposés uniquement ceux qui roulent le samedi. Enfin à la réception de RQFS, la liste sera actualisée avec les trains roulant uniquement le dimanche.

En référence à la **Figure 6C**, l'invention peut aussi prévoir d'envoyer, dans chaque requête intermédiaire RQI1, RQI2 et RQI3, l'intégralité de la saisie jusqu'à l'envoi de cette requête.

L'homme du métier comprendra que ces modes de réalisation diffèrent de l'art antérieur en ce que les requêtes sont envoyées avant la fin de la saisie.

En variante, certaines requêtes intermédiaires peuvent ne comporter que la partie de la demande saisie ou prononcée par l'utilisateur depuis l'envoi de la requête intermédiaire, et d'autres reprendre toute la demande saisie ou prononcée jusqu'à l'envoi de cette requête.

Dans le mode de réalisation décrit ci-dessus, la plateforme multimodale PM est implémentée sous forme d'un serveur communiquant avec le terminal TRM. Dans un autre mode de réalisation dans lequel l'interaction est écrite, la plateforme peut être incorporée dans le terminal utilisateur.

## Revendications

1. Procédé de pilotage d'un dialogue interactif pouvant être mis en oeuvre par une plateforme (PM) pour piloter un dialogue interactif entre un utilisateur d'un terminal (TRM) et un serveur d'application (SA), la plateforme, le terminal et le serveur d'application étant aptes à communiquer via un réseau de télécommunications, ce procédé comportant :
- une étape (E10) de détection de la fin d'une interaction entre ledit utilisateur et ledit terminal (TRM); et
- une étape (E20) d'envoi, suite à ladite détection (E10), d'une requête dite de fin de saisie (RQFS) audit serveur d'application (SA), ladite requête (RQFS) comportant des données représentatives de ladite interaction ;
ledit procédé étant **caractérisé en ce qu'**il comporte en outre, avant la fin de ladite interaction, au moins une étape (E40) d'envoi d'une requête intermédiaire (RQI) audit serveur d'application, la requête intermédiaire (RQI) comportant des données représentatives d'une partie seulement de ladite interaction, et au moins une étape de réception d'une réponse intermédiaire (RPI) en réponse à ladite requête intermédiaire (RQI).

2. Procédé de pilotage selon la revendication 1, **caractérisé en ce que** ladite requête intermédiaire (RQI) comporte une information représentative de ladite interaction entre l'utilisateur et le terminal depuis l'envoi de la dernière requête intermédiaire.

3. Procédé de pilotage selon la revendication 1, **caractérisé en ce que** au moins une desdites requêtes (RQFS, RQI) comporte une information représentative de toute ladite interaction entre l'utilisateur et le terminal jusqu'à l'envoi de cette requête.

4. Procédé de pilotage selon la revendication 1, dans lequel l'utilisateur interagit vocalement avec ledit terminal (TRM) **caractérisé en ce que** ladite étape (E40) d'envoi de ladite requête intermédiaire (RQI) est effectuée après la détection (EVT) de chaque fin de mot ou groupe de mots prononcé par ledit utilisateur.

5. Procédé de pilotage selon la revendication 4, dans lequel la détection d'un mot ou d'un groupe de mots est déterminée par un silence d'une durée au moins égale à la durée complete-timeout définie par le protocole MRCP.

6. Procédé de pilotage selon la revendication 1, dans lequel l'utilisateur interagit avec un clavier (KB) avec ledit terminal (TRM) **caractérisé en ce que** ladite étape (E40) d'envoi de requête intermédiaire (RQI) est effectuée après la détection de chaque fin de mot saisi par ledit utilisateur.

7. Procédé de pilotage selon la revendication 1, dans lequel l'utilisateur interagit avec un clavier (KB) avec ledit terminal **caractérisé en ce que** ladite étape d'envoi de requête intermédiaire est effectuée après la détection de chaque caractère saisi par ledit utilisateur.

8. Plateforme (PM) comportant des moyens (COM) de communication avec un terminal et des moyens de communication avec un serveur d'application (SA), cette plateforme comportant :
- des moyens de détection de la fin d'une interaction entre ledit utilisateur et ledit terminal; et
- des moyens d'envoi, suite à ladite détection, d'une requête dite de fin de saisie (RQFS) audit serveur d'application (SA), ladite requête comportant des données représentatives de ladite interaction ;
ladite plateforme (PM) étant **caractérisée en ce que** lesdits moyens d'envoi sont aptes à envoyer au moins une requête intermédiaire (RQI) audit serveur d'application, avant la fin de ladite interaction, la requête intermédiaire comportant des données représentatives d'une partie seulement de ladite interaction, et **en ce qu'**elle comporte des moyens de réception, avant la fin de ladite interaction, d'au moins une réponse intermédiaire (RPI) en réponse à ladite au moins une requête intermédiaire (RQI).

9. Programme d'ordinateur (PG1) comportant des instructions pour l'exécution des étapes du procédé de pilotage selon l'une quelconque des revendications 1 à 7 lorsque ledit programme est exécuté par un ordinateur.

10. Support d'enregistrement lisible par un ordinateur sur lequel est enregistré un programme d'ordinateur (PG1) comprenant des instructions pour l'exécution des étapes du procédé de pilotage selon l'une quelconque des revendications 1 à 7.

11. Procédé de gestion d'un dialogue interactif pouvant être mis en oeuvre par un serveur d'application (SA), ce procédé comportant :
- une étape (F10) de réception d'une requête dite de fin de saisie (RQFS) comportant des données représentatives d'une interaction entre un utilisateur et un terminal ; et
- une étape (F20) d'envoi d'une réponse de fin de saisie (RPFS) en réponse à ladite requête ;
ledit procédé étant **caractérisé en ce qu'**il comporte en outre, avant la réception de ladite requête de fin de saisie (RQFS) au moins :
- une étape (F30) de réception d'une requête intermédiaire (RQI) comportant des données représentatives d'une partie seulement de ladite interaction ; et
- une étape (F40) d'envoi d'une réponse intermédiaire (RPI) en réponse à ladite requête intermédiaire (RQI).

12. Serveur d'application (SA) comportant :
- un gestionnaire de dialogues (MGD) ;
- des moyens (COM) de réception d'une requête dite de fin de saisie (RQFS) comportant des données représentatives d'une interaction entre un utilisateur et un terminal ; et
- des moyens (COM) d'envoi d'une réponse de fin de saisie (RPFS) en réponse à ladite requête ;
ledit serveur d'application étant **caractérisé en ce qu'**il comporte des moyens (COM) pour recevoir, avant la réception de ladite requête de fin de saisie (RQFS) au moins une requête intermédiaire (RQI) comportant des données représentatives d'une partie seulement de ladite interaction et des moyens pour envoyer une réponse intermédiaire (RPI) en réponse à ladite requête intermédiaire (RQI).

13. Programme d'ordinateur (PG2) comportant des instructions pour l'exécution des étapes du procédé de gestion selon la revendication 11 lorsque ledit programme est exécuté par un ordinateur.

14. Support d'enregistrement lisible par un ordinateur sur lequel est enregistré un programme d'ordinateur (PG1) comprenant des instructions pour l'exécution des étapes du procédé de gestion selon la revendication 11.
